(19) **Europäisches Patentamt / European Patent Office / Office européen des brevets**

(11) **EP 4 691 757 A1**

(12) ## EUROPEAN PATENT APPLICATION
published in accordance with Art. 153(4) EPC

(43) Date of publication:
**11.02.2026 Bulletin 2026/07**

(21) Application number: **24780917.1**

(22) Date of filing: **29.03.2024**

(51) International Patent Classification (IPC):
**B32B 5/18** (2006.01)     **B32B 7/022** (2019.01)
**C09J 7/26** (2018.01)     **C09J 7/29** (2018.01)
**C09J 7/38** (2018.01)

(52) Cooperative Patent Classification (CPC):
**B32B 5/18; B32B 7/022; C09J 7/26; C09J 7/29; C09J 7/38**

(86) International application number:
**PCT/JP2024/013335**

(87) International publication number:
**WO 2024/204824 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023059651**

(71) Applicant: **Sekisui Chemical Co., Ltd.**
**Osaka-shi, Osaka 530-8565 (JP)**

(72) Inventors:
- **MATSUKAWA, Hiroki**
  **Mishima-gun, Osaka 618-0021 (JP)**
- **SENGA, Daisuke**
  **Hasuda-shi, Saitama 349-0198 (JP)**
- **HANDA, Atsushi**
  **Hasuda-shi, Saitama 349-0198 (JP)**

(74) Representative: **Ter Meer Steinmeister & Partner Patentanwälte mbB**
**Nymphenburger Straße 4**
**80335 München (DE)**

(54) **FOAM SHEET AND PRESSURE-SENSITIVE ADHESIVE TAPE**

(57)     A multilayer foam sheet including: a base material layer including a foam layer; and a resin layer including a foam layer or a non-foam layer on at least one side of the base material directly or via another layer; wherein the multilayer foam sheet has a stress relaxation rate of 25% or more; and the multilayer foam sheet has a tensile strength of 1.6 MPa or more.

Fig. 1

## Description

Technical Field

The present invention relates to a foam sheet and pressure-sensitive adhesive tape comprising the foam sheet.

Background Art

In electronic devices such as mobile phones, cameras, displays, game devices, electronic organizers, and personal computers, foam sheets are broadly used as sealing material or impact absorbing material. At least one side of such a foam sheet may be applied with a pressure-sensitive adhesive to make pressure-sensitive adhesive tape which is used inside electronic devices. Various types of foam sheet have been heretofore suggested for use in these applications. For example, Patent Literature 1 discloses, as a foam sheet excellent in both of level-difference conformability and reworkability, a multilayer foam sheet comprising a base material layer that is a foam layer, and a surface layer that is a foam layer or a resin film and that is laminated on at least one side of the base material layer, the sheet having a 25% compressive strength and a tensile strength at break within the respective specific ranges.

Patent Literature 2 discloses, as a multilayer foam sheet excellent in flexibility and mechanical strength in a shear direction, a multilayer foam sheet comprising a base material layer that is a foam layer, and a surface layer that is a foam layer or a resin film and that is laminated on at least one side of the base material layer, the sheet having a low-speed shear modulus and a 25% compressive strength within the respective specific ranges.

Patent Literature 3 discloses, as a foam sheet having high impact resistance and flexibility, a multilayer foam sheet comprising a resin layer, and foam layers on both sides of the resin layer, respectively, the resin layer having a thickness and a 25% compressive strength within the respective specific ranges.

Patent Literature 4 discloses, as a multilayer foam sheet excellent in flexibility and mechanical strength in a shear direction, a multilayer foam sheet comprising a base material layer that is a foam layer, and a surface layer that is a foam layer or a resin film and that is laminated on at least one side of the base material layer, the sheet having a low-speed shear modulus and a 25% compressive strength within the respective specific ranges.

Citation List

Patent Literature

PTL1: JP 2022-131586 A
PTL2: JP 2022-064669 A
PTL3: WO 2022/030649
PTL4: WO 2022/080219

Summary of Invention

Technical Problem

With upsizing of displays for use in smartphones, tablets, PCs and other information terminals, TVs, etc., demand for liquid crystal panels has been increasing recently that can display images at wide viewing angle. Liquid crystal panels are sensitive to strain. Accordingly, when a tape is attached to a case, strain of the case may be reflected to the liquid crystal panel via the tape and it ensures that unevenness of light may be caused in the image in the screen. Thus, a foam tape to be attached is required to have flexibility and high stress relaxation characteristic so as not to cause unevenness of light in the image in the screen by the reflection of the strain of the case.

However, there is a trade-off relationship between stress relaxation characteristic and tensile strength in conventional foam sheets. A foamed material having stress relaxation characteristic has small tensile strength. Such a foam tape is broken while the foam tape is peeled during disassembling a TV, for example, and this may disadvantageously arise the problem of failure in appropriate rework.

Then, an object of the present invention is to provide a foam sheet that causes no unevenness of light in an image in a screen when used for, for example, a large screen of an electronic device and also that is excellent in reworkability.

Solution to Problem

The present inventors have made earnest studies to achieve the above-described object. As a result, they have found that the above-described object can be achieved by a multilayer foam sheet comprising: a base material layer that is a foam layer; and a surface layer that is a foam layer or a resin film and that is laminated on at least one side of the base material layer directly or via another layer, the sheet having a specific stress relaxation rate and a specific tensile strength, and thus they have completed the present invention.

Specifically, the present invention provides [1] to [9] below.

[1] A multilayer foam sheet comprising: a base material layer that is a foam layer; and a surface layer that is a foam layer or a non-foam layer and that is laminated on at least one side of the base material layer directly or via another layer, the multilayer foam sheet having a stress relaxation rate of 25% or more, and the multilayer foam sheet having a tensile strength of 1.6 MPa or more.

[2] The multilayer foam sheet according to [1], wherein the multilayer foam sheet has a density of 0.05 to 0.2 $g/cm^3$.

[3] The multilayer foam sheet according to [1] or [2], wherein the multilayer foam sheet has a thickness of 0.3 to 1.7 mm.

[4] The multilayer foam sheet according to any of [1] to [3], wherein the multilayer foam sheet has a 25% compressive strength of 150 kPa or less.

[5] The multilayer foam sheet according to any of [1] to [4], wherein when the multilayer foam sheet comprises the surface layer on either one side of the base material layer, a ratio of a thickness of the base material layer to a thickness of the surface layer is 5 or more, and when the multilayer foam sheet comprises the surface layer on each of both sides of the base material layer, a ratio of a thickness of the base material layer to an average thickness of the surface layers is 5 or more.

[6] The multilayer foam sheet according to any of [1] to [5], wherein the base material layer has a density of 0.04 to 0.14 $g/cm^3$.

[7] The multilayer foam sheet according to any of [1] to [6], wherein when the surface layer is the foam layer, the base material layer has a gel fraction of 13 to 50% by mass, and when the surface layer is the non-foam layer, the base material layer has a gel fraction of 13 to 75% by mass.

[8] The multilayer foam sheet according to any of [1] to [7], wherein the base material layer comprises at least one selected from the group consisting of an olefinic resin and a thermoplastic elastomer.

[9] A pressure-sensitive adhesive tape comprising: the multilayer foam sheet according to any of [1] to [8]; and a pressure-sensitive adhesive material provided on at least one side of the multilayer foam sheet.

Advantageous Effects of Invention

The present invention can provide a foam sheet that causes no unevenness of light in an image in a screen when the sheet is used for a large screen of an electronic device, for example, and also that is excellent in reworkability.

Brief Description of Drawing

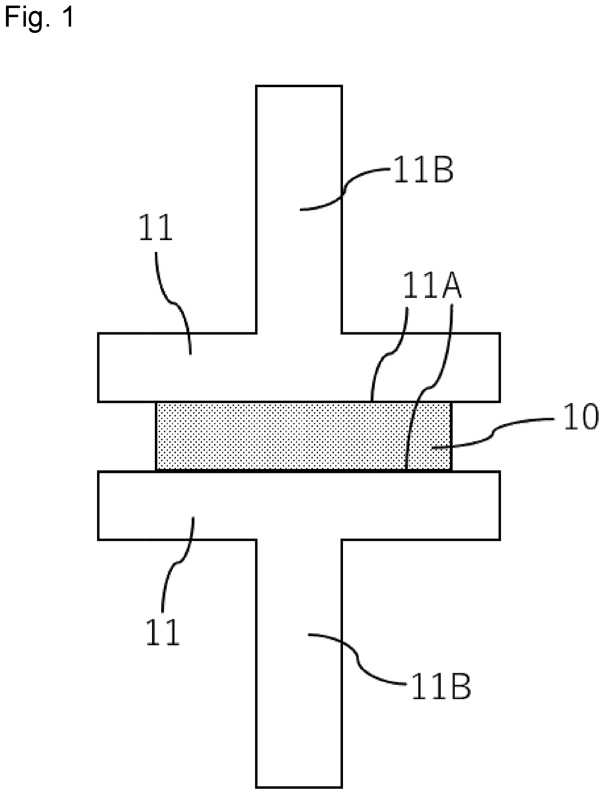

[Fig. 1] Fig. 1 is a schematic view illustrating a method for evaluating the holding characteristic of a form sheet.

Description of Embodiments

[Multilayer foam sheet]

The multilayer foam sheet of the present invention includes: a base material layer that is a foam layer; and a surface layer that is a foam layer or a non-foam layer and that is laminated on at least one side of the base material layer; wherein the multilayer foam sheet has a stress relaxation rate of 25% or more and a tensile strength of 1.6 MPa or more. Therefore, the multilayer foam sheet causes no unevenness of light in an image in a screen when used for a large screen of an electronic device, for example, and is also excellent in reworkability.

More specifically, when the multilayer foam sheet is used, for example, in the inside of a thin electronic device or the like, the multilayer foam sheet disperses the stress due to the strain of the case in the planar direction of the multilayer foam sheet since the sheet has a stress relaxation rate of 25% or more. Accordingly, the stress reflected to the panel can be reduced to effectively prevent unevenness of light caused in an image in the screen. In addition, while the multilayer foam sheet is peeled from the adherend, such as a case or a panel, in repair of an electronic device, for example, the multilayer foam sheet, which has a tensile strength of 1.6 MPa or more, is prevented from brakeage and can be peeled without part of the sheet remaining on the adherend.

(Stress relaxation rate)

The multilayer foam sheet of the present invention has a stress relaxation rate of 25% or more. When the stress relaxation rate is less than 25%, unevenness of light may be caused in an image in a screen when the sheet is used for a large screen of an electronic device, for example. From this viewpoint, the stress relaxation rate is preferably 26% or more, more preferably 30% or more, further preferably 35% or more. From the viewpoint of imparting a certain body to the multilayer foam sheet to easily provide excellent reworkability, the stress relaxation rate is preferably 80% or less, more preferably 75% or less, further preferably 70% or less, but not limited thereto.

A stress relaxation rate at a desirable level can be obtained by tailoring the cell structure in the multilayer foam sheet, the expansion rate, types of resins of the base material layer and the surface layer, and others. The stress relaxation rate can be determined by the method described in Examples described below.

(Tensile strength)

The multilayer foam sheet of the present invention has a tensile strength of 1.6 MPa or more. When the tensile strength is less than 1.6 MPa, the multilayer foam sheet may be broken in reworking, resulting in poor reworkability. From the viewpoint of good reworkability, the tensile strength is preferably 1.7 MPa or more, more preferably 1.75 MPa or more. From the viewpoint of imparting a certain flexibility to the multilayer foam sheet to be unlikely to cause unevenness of light in an image in a screen when the sheet is used for a large screen of an electronic device, the tensile strength is preferably 5 MPa or less, more preferably 4.5 MPa or less, further preferably 4 MPa or less.

Either the tensile strength of the multilayer foam sheet in the machine direction (MD) or that in the direction transverse to the MD (transverse direction: TD) may be equal to or more than the above-described lower limit, and more preferably, both of them are equal to or more than the above-described lower limit. Similarly, either the tensile strength in the MD or that in the TD may be equal to or less than the above-described upper limit, and more preferably, both of them are equal to or less than the above-described upper limit. The tensile strength can be determined by the method described in Examples described below.

(25% Compressive strength)

The multilayer foam sheet of the present invention preferably has a 25% compressive strength of 150 kPa or less, preferably 150 kPa or less, more preferably 145 kPa or less, further preferably 60 kPa or less. When the 25% compressive strength is equal to or less than the above-described upper limit, the multilayer foam sheet has good flexibility so that unevenness of light is more unlikely to be caused in an image in a screen when the sheet is used for a large screen of an electronic device. From the viewpoint of imparting a certain firm body to the multilayer foam sheet to easily ensure excellent reworkability, the 25% compressive strength is preferably 10 kPa or more, more preferably 20 kPa or more, further preferably 30 kPa or more.

The 25% compressive strength can be determined by the method described in Examples described below.

(Density)

The multilayer foam sheet of the present invention preferably has a density of 0.05 to 0.2 g/cm$^3$, more preferably from 0.055 to 0.15 g/cm$^3$ and further preferably from 0.06 to 0.11 g/cm$^3$. When the density of the multilayer foam sheet is equal to or less than the above-described upper limit, the multilayer foam sheet has good flexibility so that unevenness of light is more unlikely to be caused in an image in a screen when the sheet is used for a large screen of an electronic device. When the density is equal to or more than the above-described lower limit, the multilayer foam sheet has appropriate mechanical strength. The density here means the apparent density and is a value as determined in accordance with JIS K 7222(2005).

In the multilayer foam sheet of the present invention, the base material layer that is a foam layer preferably has a density of 0.03 to 0.15 g/cm$^3$, more preferably from 0.04 to 0.14 g/cm$^3$ and further preferably from 0.05 to 0.085 g/cm$^3$. When the density of the base material layer is equal to or less than the above-described upper limit, the foam sheen has enhanced flexibility so that unevenness of light is unlikely to be caused in an image in a screen when the sheet is used for a large screen of an electronic device. When the density of the base material layer is equal to or more than the above-described lower limit, the foam sheet tends to have enhanced reworkability.

When the surface layer is the foam layer, the density of the foam layer is preferably higher than the density of the base material layer, and preferably 0.2 to 0.9 g/cm$^3$, more preferably from 0.22 to 0.83 g/cm$^3$ and further preferably from 0.25 to 0.67 g/cm$^3$. When the density of the foam layer as the surface is equal to or less than the above-described upper limit, the foam sheet has enhanced flexibility so that followability to the adherend tends to be good when the sheet is used for a large screen of an electronic device. When the density of the foam layer as the surface is equal to or more than the above-described lower limit, the multilayer foam sheet has enhanced tensile strength so that the multilayer foam sheet tends to have improved reworkability.

The density can be measured by the method described in Examples described below.

In the present invention, the base material layer is regulated so as to have a relatively small density as described above while a foam layer having a large density described above or a non-foam layer is used as the surface layer. This can easily provide a multilayer foam sheet that causes no unevenness of light in an image in a screen when used for a large screen of an electronic device and also that is excellent in reworkability.

(Thickness)

The multilayer foam sheet preferably has a thickness of 0.3 to 1.7 mm, more preferably from 0.32 to 1.5 mm, and further preferably from 0.5 to 1.2 mm. When the thickness is equal to or less than the above-described upper limit, the sheet is easier to use in a thin electronic device. When the thickness is equal to or more than the above-described lower limit, flexibility and tensile strength are provided at respective certain levels, and accordingly, a multilayer foam sheet obtained tends to cause no unevenness of light in an image in a screen when used for a large screen of an electronic device and also that is excellent in reworkability.

In a case where the multilayer foam sheet of the present invention includes the surface layer on either one side of the base material layer (typically, in a case of a bilayer structure), the ratio of the thickness of the base material layer to the thickness of the surface layer (hereinafter, also referred to as "ratio 1") is preferably 5 or more, more preferably 5.5 or more, and further preferably 7 or more. The ratio 1 is preferably 120 or less, more preferably 110 or less, and further preferably 105 or less.

In a case where the multilayer foam sheet of the present invention includes the surface layer on each of both sides of the base material layer, respectively, (typically, in a case of a trilayer structure), the ratio of the thickness of the base material layer to the average thickness of the surface layers (hereinafter, also referred to as "ratio 2") is preferably 5 or more, more preferably 5.5 or more, and further preferably 7 or more. The ratio 2 is preferably 120 or less, more preferably 110 or less, and further preferably 105 or less.

When these ratios each are equal to or more than the above-described lower limit, the proportion of the base material layer is large in the whole of the multilayer foam sheet, and the stress relaxation rate of the multilayer foam sheet is thus at a certain level or higher. Due to this, unevenness of light can be unlikely to be caused in an image in a screen when the sheet is used for a large screen of an electronic device. In addition, the multilayer foam sheet in this case has flexibility at a certain level, thus the sheet tends to have good followability to an adherend.

When these ratios each are equal to or less than the above-described upper limit, the proportion of the surface layer(s) is at a certain level or higher in the whole of the multilayer foam sheet, and the multilayer foam sheet has a tensile strength at a certain level and therefore tends to have enhanced reworkability.

In the multilayer foam sheet of the present invention, the base material layer preferably has a thickness of 0.05 to 1.5 mm, more preferably from 0.08 to 1.2 mm, and further preferably from 0.1 to 1 mm. When the thickness of the base material layer is equal to or more than the above-described lower limit, the multilayer foam sheet has enhanced flexibility to be unlikely to cause unevenness of light in an image in a screen when the sheet is used for a large screen of an electronic device. When the thickness of the base material layer is equal to or less than the above-described upper limit, the multilayer foam sheet has a small thickness , thus the sheet becomes easier to be suitably used in a thin electronic device.

In the multilayer foam sheet of the present invention, the surface layer preferably has a thickness of 0.01 to 0.5 mm, more preferably from 0.05 to 0.3 mm, and further preferably from 0.08 to 0.2 mm. In a case where the multilayer foam sheet includes two surface layers on both sides of the base material layer, respectively, at least one of the surface layers desirably has a thickness within the above-described range, and preferably, both surface layers each have a thickness within the above-described range. When the thickness of the surface layer is equal to or more than the above-described lower limit, the multilayer foam sheet has a tensile strength at a certain level and thus tends to have enhanced reworkability. When the thickness of the surface layer is equal to or less than the above-described upper limit, the multilayer foam sheet has enhanced flexibility to be unlikely to cause unevenness of light in an image in a screen when the sheet is used for a large screen of an electronic device.

(Gel fraction)

In a case where the surface layer is a foam layer, the base material layer of the multilayer foam sheet of the present invention preferably has a gel fraction of 13 to 50 % by mass, more preferably 13 to 45 % by mass, and further preferably 16 to 40 % by mass. In a case where the surface layer is a non-foam layer, the base material layer of the multilayer foam sheet of the present invention preferably has a gel fraction of 13 to 75 % by mass, more preferably 13 to 70 % by mass, further preferably 16 to 60 % by mass.

When the gel fraction is equal to or more than the above-described lower limit, the formable resin composition has a certain body, whereby the composition can be easily foamed in an appropriate manner in the production process of the multilayer foam sheet. When the gel fraction is equal to or less than the above-described upper limit, the formable resin composition is not too hard, whereby the composition can be easily foamed in an appropriate manner. Thus, when the gel fraction falls within the above-described range, the resulting a multilayer foam sheet has an expansion rate at a certain level or higher, and it is thus easy to obtain a multilayer foam sheet that is unlikely to cause unevenness of light in an image in a screen when used for a large screen of an electronic device.

(Average cell diameter)

The multilayer foam sheet of the present invention preferably has an average cell diameter in the MD direction of 70 to 500 $\mu$m, more preferably 80 to 400 $\mu$m, further preferably 100 to 300 $\mu$m. The multilayer foam sheet preferably has an average cell diameter in the TD direction of 60 to 450 $\mu$m, more preferably 70 to 350 $\mu$m, further preferably 90 to 250 $\mu$m. The multilayer foam sheet preferably has an average cell diameter in the ZD direction of 40 to 350 $\mu$m, more preferably 50 to 300 $\mu$m, further preferably 60 to 220 $\mu$m.

When the average cell diameter is equal to or more than the above-described lower limit, the multilayer foam sheet has a stress relaxation at a certain level or higher, and is thus unlikely to cause unevenness of light in an image in a screen when used for a large screen of an electronic device. When the average cell diameter is equal to or less than the above-described upper limit, the multilayer foam sheet has a small thickness and is thus easy to use suitably for a thin electronic device.

The average cell diameter can be measured by the method described in Examples. The average cell diameter can be adjusted so as to fall within the desired range by, for example, the type and formulation of the foaming agents. The average cell diameter can also be adjusted so as to fall within the desired range by appropriately stretching while foaming the formable resin composition for obtaining a multilayer foam sheet or after foaming.

The multilayer foam sheet of the present invention preferably has a ratio of the average cell diameter in the MD direction to that in the ZD direction, MD/ZD, of 1.1 or more, more preferably 1.2 or more, further preferably 1.4 or more. The multilayer foam sheet of the present invention preferably has a ratio of the average cell diameter in the TD direction to that in the ZD direction, TD/ZD, of 1.02 or more, more preferably 1.03 or more, further preferably 1.1 or more. When at least one of the MD/ZD and the TD/ZD is equal to or more than the above-described lower limit, the cell is in a flat form, which easily results in a high stress relaxation rate of the multilayer foam sheet.

The MD/ZD is preferably 3 or less, more preferably 2.5 or less, further preferably 1.7 or less. The TD/ZD is preferably 2.5 or less, more preferably 2.4 or less, further preferably 2.35 or less. When at least one of the MD/ZD and the TD/ZD is equal to or less than the above-described upper limit, the cell is not too flat, which easily imparts excellent reworkability to the multilayer foam sheet.

Hereinafter, the base material layer that is a foam layer and surface layer will be described in more detail.

<Base material layer (foam layer)>

The base material layer in the multilayer foam sheet of the present invention is a foam layer. The type of the resin constituting the base material layer is not particularly limited. It is preferable to use a thermoplastic resin, and examples thereof include olefinic thermoplastic resins, acrylic resins, polyurethane-based resins, and thermoplastic elastomers. These may be used singly or in combination of two or more. The base material layer preferably includes at least one resin selected from the group consisting of olefinic resins and thermoplastic elastomers and more preferably includes an olefinic resin. When an olefinic resin or a thermoplastic elastomer is used, the flexibility, mechanical strength, and the like of the base material layer are more likely to be achieved while the foaming property and the like are made satisfactory. The resins to be used in the base material layer may be used singly or in combination of two or more. It is also preferable to use the olefinic resin and the thermoplastic elastomer in combination.

Specific examples of the olefinic resins include polyethylene resins, polypropylene resins, and ethylene-vinyl acetate copolymers, and at least one selected from polyethylene resins and ethylene-vinyl acetate copolymers is preferable among these. Use of the polyethylene resin or the ethylene-vinyl acetate copolymer easily increases the stress relaxation rate of the multilayer foam sheet to be unlikely to cause unevenness of light in an image in a screen when the sheet is used for a large screen of an electronic device. In a case where the ethylene-vinyl acetate copolymer is used, a high stress relaxation rate of the multilayer foam sheet can be obtained even when the expansion ratio of the base material layer is relatively small.

Examples of the polyethylene resins include polyethylene resins obtained by polymerization with a polymerization catalyst such as a Ziegler-Natta compound, a metallocene catalyst, or a chromium oxide compound, and a polyethylene resin obtained by polymerization with a metallocene catalyst is preferably used.

(Metallocene catalyst)

Examples of the metallocene catalyst include compounds such as a bis(cyclopentadienyl) metal complex having a structure in which transition metal is interposed between $\pi$-electron system unsaturated compounds. More specific examples include compounds in which 1 or 2 or more cyclopentadienyl rings or analogues thereof are present as ligands on tetravalent transition metal such as titanium, zirconium, nickel, palladium, hafnium, and platinum.

In these metallocene catalysts, active sites have uniform properties, and each of the active sites has the same activity. A polymer synthesized using a metallocene catalyst has high uniformity in molecular weight, molecular weight distribution, composition, compositional distribution, and the like. Thus, when a sheet including a polymer synthesized using a metallocene catalyst is crosslinked, the crosslinking proceeds uniformly. The uniformly crosslinked sheet is foamed uniformly and thus more likely to stabilize its physical properties. Additionally, the sheet can be stretched uniformly, and thus the thickness of the foam can be uniform.

Examples of the ligands include cyclopentadienyl rings and indenyl rings. These cyclic compounds may be substituted with a hydrocarbon group, a substituted hydrocarbon group, or a hydrocarbon-substituted metalloid group. Examples of the hydrocarbon group include a methyl group, an ethyl group, various propyl groups, various butyl groups, various amyl groups, various hexyl groups, a 2-ethylhexyl group, various heptyl groups, various octyl groups, various nonyl groups, various decyl groups, various cetyl groups, and a phenyl group. The term "various" means various isomers including n-, sec-, tert-, and iso-.

An oligomer obtained by polymerizing a cyclic compound may be used as a ligand.

In addition to $\pi$-electron system unsaturated compounds, monovalent anionic ligands of chlorine, bromine, or the like or divalent anionic chelate ligands, hydrocarbons, alkoxides, arylamides, aryloxides, amides, arylamides, phosphides, and arylphosphides further may be used.

Examples of metallocene catalysts containing tetravalent transition metal or a ligand include cyclopentadienyl titanium tris(dimethylamide), methylcyclopentadienyl titanium tris(dimethylamide), bis(cyclopentadienyl) titanium dichloride, and dimethylsilyl tetramethylcyclopentadienyl-t-butylamide zirconium dichloride.

The metallocene catalyst, when in combined with a specific cocatalyst (promoter), exerts a catalytic effect on polymerizing various olefins. Specific examples of the cocatalyst include methyl aluminoxane (MAO) and boron-based compounds. The ratio of the cocatalyst to be used with respect to the metallocene catalyst is preferably from 10 to 1,000,000 molar times and more preferably from 50 to 5,000 molar times.

As the polyethylene resin, a linear low-density polyethylene is preferable. The linear low-density polyethylene is more preferably a linear low-density polyethylene obtained by copolymerizing ethylene (e.g., 75% by mass or more and preferably 90% by mass or more based on the total monomer amount) and a small amount of an $\alpha$-olefin as required. Specific examples of the $\alpha$-olefin include propylene, 1-butene, 1-pentene, 4-methyl-1-pentene, 1-hexene, I-heptene, and 1-octene. Among these, $\alpha$-olefins having 4 to 10 carbon atoms are preferable.

The density of the polyethylene resin, for example, the linear low-density polyethylene described above is preferably from 0.870 to 0.925 $g/cm^3$, more preferably from 0.890 to 0.925 $g/cm^3$, and further preferably from 0.910 to 0.925 $g/cm^3$, from the viewpoint of flexibility. As the polyethylene resin, a plurality of polyethylene resins also can be used, and a polyethylene resin having a density out of the density range described above may be added.

Examples of the ethylene-vinyl acetate copolymer to be used as the olefinic resin include an ethylene-vinyl acetate copolymer containing 50% by mass or more of ethylene.

Examples of the polypropylene resin include homopolypropylene and propylene-$\alpha$-olefin copolymers containing 50% by mass or more of propylene. These may be used singly or in combination of two or more. Specific examples of the $\alpha$-olefin constituting the propylene-$\alpha$-olefin copolymer can include ethylene, 1-butene, 1-pentene, 4-methyl-1-pentene, 1-hexene, 1-heptene, and 1-octene, and among these, an $\alpha$-olefin having 6 to 12 carbon atoms is preferable.

Examples of the thermoplastic elastomer include olefinic thermoplastic elastomers, styrenic thermoplastic elastomers, vinyl chloride-based thermoplastic elastomers, polyurethane-based thermoplastic elastomers, polyester-based thermoplastic elastomers, and polyamide-based thermoplastic elastomers. As the thermoplastic elastomer, these components may be used singly or in combination of two or more.

Among these, olefinic thermoplastic elastomers and styrenic thermoplastic elastomers are preferable, and styrenic thermoplastic elastomers are more preferable.

For the thermoplastic elastomer, it is preferable that at least one temperature at which the loss tangent (tan $\delta$) of dynamic viscoelasticity is the maximum value should be within at least the predetermined temperature range (-45 to 50°C). When at least one temperature at which the tan $\delta$ of dynamic viscoelasticity is the maximum value is at least around normal temperature, the multilayer foam sheet more easily has a stress relaxation rate of 25% or more. From such a viewpoint, it is more preferable that at least one temperature at which the loss tangent (tan $\delta$) of dynamic viscoelasticity is the maximum value should be within at least a range from -40 to 40°C, more preferably -35 to 35°C. The tan $\delta$ of the multilayer foam sheet is that obtained by dynamic viscoelasticity measurement at a measuring frequency of 10Hz. The tan $\delta$ is the ratio between the storage shear modulus (G') and the loss shear modulus (G"), G"/ G', and indicates how much energy is absorbed (converted to heat) by a material when the material is deformed. Generally, the temperature at which the loss tangent (tan δ) of a thermoplastic elastomer is the maximum value is the glass transition temperature (Tg) of the thermoplastic elastomer.

The maximum value of the loss tangent (tan δ) of a thermoplastic elastomer is preferably 0.5 or more, more preferably 1.0 or more, further preferably 1.5 or more, and generally desirably 4.0 or less. The maximum value here is desirably such that the temperature at which the tan δ is the maximum value is within the range from -45 to 50°C.

Examples of the olefinic thermoplastic elastomer include blended, dynamic crosslinked, and polymerized olefinic thermoplastic elastomers, and more specific examples include thermoplastic elastomers in which a thermoplastic crystalline polyolefin such as polypropylene or polyethylene is used as a hard segment and fully vulcanized or partially vulcanized rubber is used as a soft segment.

Examples of the thermoplastic crystalline polyolefin include a homopolymer of an α-olefin having 1 to 4 carbon atoms or a copolymer of 2 or more α-olefins, and polyethylene or polypropylene is preferable. Example of a soft segment component include butyl rubber, halobutyl rubber, EPDM, EPM, acrylonitrile/butadiene rubber, NBR, and natural rubber, and among these, EPDM is preferable.

Examples of the olefinic thermoplastic elastomer also include block copolymer types. Examples of the block copolymer types include those having crystalline blocks and soft segment blocks, and more specific examples include crystalline olefin block-ethylene·butylene copolymer-crystalline olefin block copolymers (CEBCs). In a CEBC, the crystalline olefin block is preferably a crystalline ethylene block, and examples of such commercially available CEBC products include "DYNARON 6200P" manufactured by JSR Corporation.

Examples of the olefinic thermoplastic elastomer also include "ABSORTOMER EP1001".

Examples of the styrenic thermoplastic elastomer include block copolymers having a polymer or copolymer block of styrene and a polymer or copolymer block of a conjugated diene compound. Examples of the conjugated diene compound include isoprene and butadiene.

The styrenic thermoplastic elastomer to be used in the present invention may be or may not be hydrogenated. When the elastomer is hydrogenated, the hydrogenation can be performed by a known method.

The styrenic thermoplastic elastomer is usually a block copolymer, and examples thereof include styrene-isoprene block copolymers, styrene-isoprene-styrene block copolymers, styrene-butadiene block copolymers, styrene-butadiene-styrene block copolymers, styrene-ethylene/butylene-styrene block copolymers (SEBSs), styrene-ethylene/-propylene-styrene block copolymers (SEPSs), styrene-ethylene/butylene block copolymers (SEBs), styrene-ethylene/-propylene block copolymers (SEPs), and styrene-ethylene/butylene-crystalline olefin block copolymers (SEBCs).

As the styrenic thermoplastic elastomers described above, block copolymers are preferable, and in particular, SEBSs and SEBCs are more preferable.

Examples of commercially available products of the styrenic thermoplastic elastomer include product name "DYNARON 8600P" (styrene content: 15% by mass), product name "DYNARON 4600P" (styrene content: 20% by mass), product name "DYNARON 1321P" (styrene content: 10% by mass) manufactured by JSR Corporation, product name "HYBRAR 7311" manufactured by Kuraray Co., Ltd, and product name "S.O.E. (registered trademark) S1609" manufactured by Asahi Kasei Corporation.

It is preferable to use the olefinic resin and the thermoplastic elastomer in combination as the resin constituting the base material layer. Among others, it is preferable to use a linear low-density polyethylene and a thermoplastic elastomer in combination.

In a case where the olefinic resin and the thermoplastic elastomer are used in combination, the mass ratio of the thermoplastic elastomer to the olefinic resin is preferably 15/80 to 85/15, more preferably 20/80 to 80/20, further preferably 25/75 to 75/25. When the mass ratio is equal to or more than the above-described lower limit, the multilayer foam sheet tends to have a stress relaxation rate at a certain level or higher due to the elastomer to be unlikely to cause unevenness of light in an image in a screen when the sheet is used for a large screen of an electronic device. When the mass ratio is equal to or less than the above-described upper limit, appropriate foaming can easily occur to easily obtain a base material layer having an expansion rate at a certain level or higher.

[Additives]

The base material layer that is a foam layer used in the present invention can be preferably obtained by foaming a formable resin composition including the above resin and a foaming agent. The foaming agent is preferably a thermally decomposable foaming agent.

As the thermally decomposable foaming agent, organic foaming agents and inorganic foaming agents can be used. Examples of organic foaming agents include azo compounds such as azodicarbonamide, metal salts of azodicarboxylic acid (such as barium azodicarboxylate), and azobisisobutyronitrile; nitroso compounds such as N,N'-dinitrosopentamethylenetetramine; hydrazine derivatives such as hydrazodicarbonamide, 4,4'-oxybis(benzenesulfonylhydrazide), and toluenesulfonylhydrazide, and semicarbazide compounds such as toluene sulfonyl semicarbazide.

Examples of inorganic foaming agents include ammonium carbonate, sodium carbonate, ammonium hydrogen carbonate, sodium hydrogen carbonate, ammonium nitrite, sodium borohydride, and anhydrous monosodium citrate.

Among these, from the viewpoint of obtaining fine cells and from the viewpoint of economic efficiency and safety, azo compounds are preferable, and azodicarbonamide is more preferable.

The thermally decomposable foaming agents may be used singly or in combination of two or more.

The amount of the foaming agent compounded into the expandable resin composition for forming the base material layer is preferably from 1 to 20 parts by mass, more preferably from 3 to 15 parts by mass, and further preferably from 5 to 10 parts by mass based on 100 parts by mass of the resin. When the amount of the foaming agent compounded is set to 1 part by mass or more, certain flexibility can be imparted to the foam sheet. When the amount of the foaming agent compounded is set to 20 parts by mass or less, the foam layer is prevented from unnecessarily foaming, and the mechanical strength and the like of the foam layer can be made satisfactory.

A decomposition temperature modifier may be compounded in the expandable resin composition. A decomposition temperature modifier is compounded to lower the decomposition temperature of the thermally decomposable foaming agent or to enhance or adjust the decomposition speed thereof, and examples of specific compounds include zinc oxide, zinc stearate, and urea. For example, 0.01 to 5 parts by mass of the decomposition temperature modifier is compounded based on 100 parts by mass of the resin, for adjusting the surface state and the like of the foam layer.

An antioxidant may be compounded in the expandable resin composition. Examples of the antioxidant include phenol-based antioxidants such as 2,6-di-t-butyl-p-cresol, sulfur-based antioxidants, phosphorus-based antioxidants, and amine-based antioxidants. For example, 0.01 to 5 parts by mass of the antioxidant are compounded based on 100 parts by mass of the resin.

In the base material layer, the resin is the main component, and the content of the resin is, for example, 70% by mass or more, preferably 80% by mass or more, and more preferably 90% by mass or more based on the total amount of the foam layer.

The expandable resin composition may contain additives generally used in foams such a heat stabilizer, a coloring agent, a fire retardant, an antistatic agent, and a filler as required, in addition to those described above.

\<Surface layer\>

The surface layer is laminated on at least one side of the base material layer. That is, the surface layer may be laminated on one side of the base material layer or may be laminated on both sides of the base material layer. Among these, from the viewpoint of enhancing the reworkability, the surface layer is preferably laminated on both sides of the base material layer.

The surface layer is the foam layer or the non-foam layer. In the present invention, the surface layer is preferably the non-foam layer. The non-foam layer as the surface layer enhances the tensile strength of the multilayer foam sheet to easily impart excellent reworkability.

On the other hand, when the surface layer is the form layer, the followability to an adherend tends to be better.

In the surface layer, types of the resin constituting the non-foam layer are not particularly limited. Examples of the resin constituting the non-foam layer include olefinic resins, acrylic resins, polyurethane-based resins, and thermoplastic elastomers, similarly as the resin of the above base material layer. Besides these, silicone-based resins, vinyl chloride-based resins, styrenic resins, polyester-based resins, polyamide-based resins, and ionomer-based resins also may be used.

In the surface layer, the resins may be used singly or in combination of two or more. When the surface layer is laminated on both sides of the foam layer, the resins each used in the 2 surface layers may be a resin of the same type to each other or may be different resins. From the viewpoint of productivity and from the viewpoint that both the layers are easily allowed to have the same or similar physical properties, the resins are preferably of the same type to each other.

The resin constituting the surface layer is preferably a thermoplastic resin, and use of a thermoplastic resin enables the surface layer to easily adhere on the base material layer.

The resin to be used in each of the surface layers is preferably an olefinic resin among those described above. Use of the olefinic resin can provide even better reworkability of the foam sheet. In the case where an olefinic resin or a thermoplastic elastomer is used in the base material layer, adhesiveness of the surface layer to the foam layer can be particularly satisfactory.

Examples of the olefinic resin include polyethylene resins and polypropylene resins. The olefinic thermoplastic resin also may be an ethylene-vinyl acetate copolymer, an ethylene-ethyl acrylate copolymer, or the like.

Examples of the polyethylene resin include low-density polyethylene (density: less than $0.930 \text{ g/cm}^3$), medium-density polyethylene (density: $0.930 \text{ g/cm}^3$ or more and less than $0.942 \text{ g/cm}^3$), and high-density polyethylene (density: $0.942 \text{ g/cm}^3$ or more). Examples of the polyethylene resin also include a linear low-density polyethylene. The details of the linear low-density polyethylene are as described in the description of the base material layer, and thus the details thereof are omitted. The details of the polypropylene resin are also as described in the description of the base material layer, and thus the details thereof are omitted.

The ethylene-vinyl acetate copolymer used for the surface layer is as stated in the description for the base material layer, and details thereof are omitted.

Examples of the ethylene-ethyl acrylate copolymer include an ethylene-ethyl acrylate copolymer containing 50% by mass or more of a constituent unit derived from ethylene.

It is preferable to use the polyethylene resin as the resin constituting the surface layer. In this case, at least one of the low-density polyethylene, the medium-density polyethylene, and the high-density polyethylene described above may be used. It is preferable to use the linear low-density polyethylene, and it is also preferable to use the linear low-density polyethylene and the high-density polyethylene in combination. Use of the high-density polyethylene in addition to the linear low-density polyethylene enhances the tensile strength of the multilayer foam sheet to easily impart excellent reworkability to the multilayer foam sheet.

In the surface layer, the resin is the main component, and the content of the resin is, for example, 70% by mass or more, preferably 80% by mass or more, and more preferably 90% by mass or more based on the total amount of the respective layers. The surface layer may contain additives such as an antioxidant, a heat stabilizer, a coloring agent, a fire retardant, an antistatic agent, and a filler, besides the above resin.

The surface layer may be crosslinked. The surface layer may be crosslinked in conjunction with crosslinking of the base material layer, as described in the production method 1 mentioned below. Accordingly, the surface layer is preferably crosslinked with ionizing radiation.

In the case where a foam layer is used as the surface layer, for example, an expandable resin composition may be foamed into which a foaming agent and the like are compounded, as described for the base material layer, in a resin that can be used in the surface layer described above. The amount of the foaming agent compounded into the expandable resin composition for forming the surface layer is preferably from 0.1 to 10 parts by mass, more preferably from 0.5 to 5 parts by mass, and further preferably from 1 to 3 parts by mass based on 100 parts by mass of the resin. When the amount of the foaming agent is within these ranges, the expansion ratio of the surface layer is more likely to be adjusted within the desired ranges described above.

(Adhesive layer)

In the present invention, the base material layer and the surface layer may be laminated directly or may be laminated with another layer interposed therebetween. Examples of another layer include an adhesive layer. As the adhesive layer, a known adhesive, a pressure-sensitive adhesive, or the like may be used. The adhesive layer also may be double sided pressure-sensitive adhesive tape or the like including a pressure-sensitive adhesive layer provided on both sides of the base material.

The adhesive layer may be thick enough not to markedly affect the physical properties such as mechanical strength and flexibility in the multilayer foam sheet. Accordingly, the thickness of the adhesive layer to bond the base material layer and the surface layer to each other is preferably smaller than that of the surface layer and more preferably equal to or smaller than one-half of that of the surface layer.

<Method for producing foam sheet>

(Production method 1)

The multilayer foam sheet of the present invention can be produced by, for example, a method in which a plurality of layers formed of a resin composition are laminated each other to obtain a multilayer laminate sheet, and then, the multilayer laminate sheet is foamed to obtain the multilayer foam sheet (hereinafter, also referred to as the "production method 1 "), but are not particularly limited thereto. The term "resin composition" herein also includes a case in which the composition consists of one type of a resin singly as a concept.

The production method 1 more specifically includes the following steps I to II:

(I) a step of obtaining a multilayer laminate sheet including a layer formed of an expandable resin composition and a surface layer formed on one side or both sides of the layer, and
(II) a step of foaming the layer formed of the expandable resin composition in the multilayer laminate sheet to obtain a foam sheet.

Hereinafter, each of the steps will be described.

(Step (I))

In the step (I), as a method for obtaining a multilayer laminate sheet, coextrusion is preferably performed, but are not limited thereto.

Specifically, in the case where a surface layer is formed on both sides of a layer formed of an expandable resin composition, a resin for forming the surface layer and other additives to be compounded as required are fed respectively to a first extruder and a third extruder and melt-kneaded to obtain a resin composition for forming the surface layer. Additionally, a resin for forming the base material layer, a foaming agent such as a thermally decomposable foaming agent, and additives to be compounded as required are fed to a second extruder and melt-kneaded to obtain an expandable resin composition for forming the base material layer.

Next, the resin compositions fed from the first to third extruders are joined together such that the composition fed from the second extruder is to be a middle layer, the compositions are extruded via a T-die or the like into a sheet form, and thus a multilayer laminate sheet having a three-layer structure can be obtained.

In the case where a surface layer is formed on one side of a layer formed of an expandable resin composition, a resin for forming the surface layer and other additives to be compounded as required are fed to a first extruder and melt-kneaded to obtain a resin composition for forming the surface layer. Additionally, a resin for forming the base material layer, a foaming agent such as a thermally decomposable foaming agent, and additives to be compounded as required are fed to a second extruder and melt-kneaded to obtain an expandable resin composition for forming the base material layer.

Next, the resin compositions fed from the first extruder is joined with the composition fed from the second extruder, the compositions are extruded via a T-die or the like into a sheet form, and thus a multilayer laminate sheet having a two-layer structure can be obtained. In coextrusion, either of a feed block method or a multi-manifold method is acceptable, but the feed block method is preferable.

In the step (I), the multilayer laminate sheet obtained above is preferably further crosslinked. As a crosslinking method, a method in which an organic peroxide is compounded in advance and the multilayer laminate sheet obtained in the step (I) is crosslinked by heating is included, but the multilayer laminate sheet is preferably crosslinked by irradiation with ionizing radiation. Examples of the ionizing radiation include electron beams and β-rays, but electron beams are preferable.

An irradiation dose of the ionizing radiation is preferably from 1 to 10 Mrad and more preferably from 3.0 to 7 Mrad.

(Step (II))

In the step (II), the multilayer laminate sheet obtained in the step (I) is subjected to a foaming treatment to foam the layer formed of the expandable resin composition. The layer formed of the expandable resin composition may be treated such that the foaming agent is foamed. In the case where the foaming agent is a thermally decomposable foaming agent, the layer is foamed by heating the multilayer laminate sheet. The heating temperature may be a temperature equal to or higher than the temperature at which the thermally decomposable foaming agent decomposes, and is from approximately 150 to 320°C, for example.

Examples of a method for heating the multilayer laminate sheet include, but are not particularly limited to, a method of heating the multilayer laminate sheet with hot air, a method of heating with infrared, a method of heating with a salt bath, and a method of heating with an oil bath, and these methods may be used in combination.

The multilayer laminate sheet may be stretched or the like as appropriate during or after foamed.

In the description described above, an example of the case where the surface layer is a non-foam layer has been described. In the case where the surface layer is a foam, a foaming agent such as a thermally decomposable foaming agent is compounded as an additive also in the resin composition for forming the surface layer, and foaming may be performed in the step (II).

(Second production method)

The production method of the foam sheet of the present invention can be produced by a different method. Specific examples thereof include a method in which a foam layer to compose the base material layer is produced in advance, and a non-foam layer or a foam layer composing the surface layer is superposed on one side or both sides of the foam layer and bonded thereto (also referred to as the "second production method").

As a method to obtain a foam in the second production method, a resin for forming the base material layer, a thermally decomposable foaming agent, and additives to be compounded as required are melt-kneaded to obtain an expandable resin composition for forming a base material layer, and the expandable resin composition should be molded into a sheet form (expandable resin composition sheet). The method in which the expandable resin composition is melt-kneaded and molded into a sheet form is preferably performed by using an extruder, but is not particularly limited thereto.

The resulting expandable resin composition sheet is preferably further crosslinked before the foaming described below. As a crosslinking method, a method in which an organic peroxide is compounded in advance and the expandable resin composition sheet is crosslinked by heating is included, but the expandable resin composition sheet is preferably crosslinked by irradiation with ionizing radiation. The type and irradiation dose of the ionizing radiation are as described in the first production method described above.

Next, the expandable resin composition sheet may be foamed. The layer formed of the expandable resin composition may be treated such that the foaming agent is foamed. In the case where the foaming agent is a thermally decomposable foaming agent, the layer is foamed by heating the multilayer laminate sheet. The heating temperature and heating method are as described in the first production method described above. The expandable resin composition sheet may be stretched or the like as appropriate during or after being foamed.

Thereafter, a resin film (non-foam) or a foam, separately provided, for constituting the surface layer, is superposed on one side or both sides of the foam layer composing the base material layer and bonded thereto, and thus a multilayer foam sheet can be obtained. Specifically, the layers may be thermocompression-bonded by heating and compression with a press or the like. Alternatively, the layers may be attached to each other with a pressure-sensitive adhesive, an adhesive, double sided pressure-sensitive adhesive tape, or the like by applying a pressure-sensitive adhesive, an adhesive, or the like on the adhesion face between the foam layer and the surface layer or by attaching double sided pressure-sensitive adhesive tape thereto.

[Pressure-sensitive adhesive tape]

The multilayer foam sheet of the present invention may be used in pressure-sensitive adhesive tape including a multilayer foam sheet as the base material. The pressure-sensitive adhesive tape includes, for example, a multilayer foam sheet and a pressure-sensitive adhesive material provided on at least one side of the multilayer foam sheet. The pressure-sensitive adhesive tape is enabled to adhere to other members through the pressure-sensitive adhesive material. The pressure-sensitive adhesive tape may be one including the pressure-sensitive adhesive material provided on both sides of the multilayer foam sheet or may be one including the pressure-sensitive adhesive material provided on one side of the multilayer foam sheet, but one including the pressure-sensitive adhesive material provided on both sides is preferable.

The pressure-sensitive adhesive material may be one including at least a pressure-sensitive adhesive layer, may be a single pressure-sensitive adhesive layer laminated on the surface of the multilayer foam sheet, or may be a pressure-sensitive adhesive double coated sheet attached to the surface of the multilayer foam sheet, but is preferably a single pressure-sensitive adhesive layer. The pressure-sensitive adhesive double coated sheet includes a base material and a pressure-sensitive adhesive layer provided on both sides of the base material. The pressure-sensitive adhesive double coated sheet is used for allowing one pressure-sensitive adhesive layer to adhere to the multilayer foam sheet as well as for allowing the other pressure-sensitive adhesive layer to adhere to other members.

Examples of the pressure-sensitive adhesive constituting the pressure-sensitive adhesive layer that can be used include, but are not particularly limited to, acrylic pressure-sensitive adhesives, urethane-based pressure-sensitive adhesives, and rubber-based pressure-sensitive adhesives. Additionally, a release sheet such as release paper may be further attached on the pressure-sensitive adhesive material.

The thickness of the pressure-sensitive adhesive material is preferably from 5 to 200 $\mu$m, more preferably from 7 to 150 $\mu$m, and further preferably from 10 to 100 $\mu$m.

[Applications]

The multilayer foam sheet of the present invention, and pressure-sensitive adhesive tape including the multilayer foam sheet are preferably used, for example, inside electronic devices, but are not limited thereto, and are disposed, for example, between 2 members for use as an impact absorbing material, a sealing material, or the like.

Examples of electronic devices include mobile phones, cameras, displays, gaming devices, electronic organizers, and personal computers.

The multilayer foam sheet of the present invention, and the pressure-sensitive adhesive tape including the multilayer foam sheet are excellent in reworkability, as described above, and also can exhibit the effect of causing no unevenness of light in a liquid crystal display. For this reason, the multilayer foam sheet and pressure-sensitive adhesive tape including it are preferably used particularly in a large display and specifically preferably used in a 20-inch or larger display. The display may be a liquid crystal display or an organic EL display and is preferably a liquid crystal display. In particular, the multilayer foam sheet and the pressure-sensitive adhesive tape including it can highly exhibit the effect when they are used for a 20-inch or larger liquid crystal display.

When the pressure-sensitive adhesive tape includeing the multilayer foam sheet is used in a display, the pressure-sensitive adhesive tape including the multilayer foam sheet is preferably used in the back face or the frame of the display.

Examples

The present invention will be described in more detail by way of Examples, but the present invention is not restricted by these Examples in any way.

[Measurement method]

Methods for measuring and evaluating each of the physical properties are as follows.

<Thicknesses of base material layer and surface layer (thickness of each layer after foaming)>

A cross section of the foam sheet was imaged using a digital microscope (manufactured by KEYENCE CORPORATION, product name: "VHX-900"), and the thicknesses of the base material layer and the surface layer were measured from the image taken.

<Thickness of multilayer foam sheet (total thickness after foaming)>

The sum of the thickness of the base material layer and the thickness of the surface layer was taken as the thickness of the multilayer foam sheet.

<Expansion ratio and density>

A multilayer foam sheet, and a base material layer and a surface layer composing the multilayer foam sheet each were measured for the specific volumes before and after foaming (unit: cc/g), and the expansion ratio was calculated from specific volume before foaming/specific volume after foaming. Additionally, the density was calculated from the measured specific volumes.

<Average cell diameter>

The foamed material constituting the base material layer was cut into 50 mm square, and the cut piece was immersed in liquid nitrogen for 1 minute. Then, the cut piece was cut in the thickness direction along each of the MD and the TD, and 200-fold magnified micrographs were taken using a digital microscope (manufactured by KEYENCE CORPORATION, product name: VHX-900). In the obtained image, the MD cell diameter and the ZD cell diameter, and the TD cell diameter and the ZD cell diameter, were measured for all the cells present in a cut face of 2 mm in length in the MD and the TD, respectively, in the foamed material, and this operation was repeated 5 times. Then, the average value of the MD cell diameters and that of the TD cell diameters of all the cells each were taken as the MD average cell diameter and the TD average cell diameter, respectively. The average value of the all ZD cell diameters found in the above-described operations was taken as the ZD average cell diameter.

<Tensile strength>

A multilayer foam sheet prepared in each of Examples and Comparative Examples was cut into a dumbbell No. 1 shape specified in JIS K62514.1. This was used as a specimen, and the specimen was stretched in the MD direction and measured at a measurement temperature of 23°C and a speed of 500 mm/min with a tensile tester (product name: TENSILON RTF235, manufactured by A&D Company, Limited).

<25% Compressive strength>

The 25% compressive strength when the multilayer foam sheet was compressed was measured by a method in accordance with JIS K6767. The temperature during the measurement was 23°C.

<Stress relaxation rate>

By a method in accordance with JIS K6767, the multilayer foam sheet was compressed to 25% of the whole thickness and kept still in that state for 15 minutes, and the 25% compressive strength after the sheet was kept still, which was designated as B, was measured. The 25% compressive strength before the sheet was kept still, which was designated as A, and the stress relaxation rate was calculated using the equation below. The measurement was carried out in an environment at 23°C and 50% RH.

$$\text{Stress relaxation rate } (\%) = (A\text{-}B)/A \times 100$$

<Gel fraction>

About 100 mg of a test piece was collected from the base material layer of the foam sheet, and the mass of the test piece, C (mg) was precisely weighed. Next, this test piece was immersed in 30 cm$^3$ of xylene at 120°C and left to stand for 24 hours, and then filtered through 200-mesh wire mesh to collect insoluble on the wire mesh. The insoluble was dried in vacuo, and the mass of the insoluble D (mg) was precisely weighed. The gel fraction (% by mass) was calculated from the obtained value by the following expression. The test piece was uniformly collected in the thickness direction of the multilayer foam sheet.

$$\text{Gel fraction } (\% \text{ by mass}) = 100 \times (D/C)$$

<Evaluation of unevenness in image>

The double sided pressure-sensitive adhesive tape composed of the foam sheet and pressure-sensitive adhesive layers formed on both sides of the foam sheet, respectively, was cut into pieces of tape with a width of 3 mm, and the pieces of tape was applied to three sides along the edge portion, the vertical sides and the upper horizontal side, of a liquid crystal panel with a size of 143 cm x 80 cm (65 inch TV). Then, the liquid crystal panel with the size of 143 cm x 80 cm was bonded to a TV housing with the pieces of the double sided pressure-sensitive adhesive tape, to obtain an evaluation sample, and the sample was then left stand in a vertical position for 24 hours. 24 hours after starting the leaving, the unevenness of light was observed when an image was displayed in the liquid crystal panel, to evaluate the unevenness of light in the image. The evaluation criteria was as follows.

(Evaluation criteria)

A: Unevenness of light was not found in the edge portion of the liquid crystal display screen.
B: Although unevenness of light was found in the edge portion of the liquid crystal display screen, the area thereof was less than 100 mm$^2$.
C: An area of 100 mm$^2$ or more with unevenness of light 12 was found in the edge portion of the liquid crystal display screen.

<Reworkability>

Acrylic plates were attached to both sides of double sided pressure-sensitive adhesive tape composed of a foam sheet and pressure-sensitive layers formed on both sides of the foam sheet, respectively, and the resultant was left to still stand at 23°C for 24 hours. Then, a cutter was inserted between the acrylic plates bonded to each other to tear the foam sheet. The two pieces of the torn foam sheet were each peeled from the respective acrylic plates. On that occasion, when it was possible to peel off both pieces of the foam sheet without breakage, the foam sheet was rated as "A"; when it was possible to peel off only one piece of the foam sheet without breakage, the foam sheet was rated as "B"; and when it was possible to peel off neither pieces of the foam sheet, the foam sheet was rated as "C".

<Holding characteristics>

Each of the foam sheets prepared in Example 1 and Comparative Example 1 was cut into a 20 mm-square foam sheet, and a pressure-sensitive adhesive was applied to both sides of each of the foam sheets to double sided pressure-sensitive adhesive tape having the foam sheet as base materials. The pieces of tape were used as test pieces. As shown in Fig. 1, two stainless steel (SUS) jigs 11 having a 30 mm-square bottom and a T-shaped cross section, per test piece, were provided. The pressure-sensitive adhesive sides of the test piece 10 were attached to the bottoms 11A of the jigs, respectively, so that the test piece 10 was attached so as to be sandwiched between the two jigs 11. Next, the test piece 10 in the attached state as described above was placed and cured in an oven at 40°C for 30 minutes, followed by cooling to normal temperature (23°C).
Then, using a tensile tester (product name "TENSILON RTF235", manufactured by A&D Company, Limited), the projecting parts 11B of the two jigs 11 were grabbed by the fixing tools of the tensile tester so that the pressure-sensitive adhesive sides of the test piece 10 sandwiched between the two jigs 11 were vertical to the tensile direction to fix the test piece to the tensile tester. The holding time (min) was measured at a measurement temperature of 23°C while application of a tensile load of 76 N was continued.

As in the measurement of the holding time (min), test pieces were prepared and attached to jigs to be fixed to the tensile tester. Then, a tensile load of 76 N was applied, and the tensile load remaining in the test piece was measured.

The holding time and the tensile loads remaining in the test piece 1 minute and 50 minutes after starting of application of the tensile load, as measured by the above-described methods, were as shown in Table 1.

Materials used in Examples and Comparative Examples were as follows.

<Resins>

- Polyolefin resin (a): KERNEL KF283 (manufactured by Japan Polyethylene Corporation, linear low density polyethylene resin)
- Polyolefin resin (b): HY350 (manufactured by Japan Polyethylene Corporation, high density polyethylene)
- Polyolefin resin (c): 626H (manufactured by TOSOH CORPORATION, ethylene-vinyl acetate copolymer)
- Elastomer resin (a): S.O.E. (registered trademark) S1609 (manufactured by Asahi Kasei Corporation, Hydrogenated styrene thermoplastic elastomer (SEBS)), tan $\delta$ 1.2, Tg=19°C
- Elastomer resin (b): HYBRAR 7311F (manufactured by Kuraray Co., styrene thermoplastic elastomer), tan $\delta$ 1.5, Tg=-32°C
- Elastomer resin (c): "ABSORTOMER EP1001" (manufactured by Mitsui Chemicals, Inc., $\alpha$-olefin copolymer), tan $\delta$ 2.7, Tg=30°C

<Additives>

- Foaming agent: thermally decomposable foaming agent (azodicarbonamide)
- Foaming auxiliary agent: OW-212F (manufactured by Sakai Chemical Industry Co., Ltd., zinc oxide)
- Antioxidant: phenolic antioxidant (2,6-di-t-butyl-p-cresol)

[Method for preparing multilayer foam sheet]

Multilayer foam sheets of Examples 1 to 9 and Comparative Examples 1 to 6 were prepared as follows.

<Example 1>

According to the formulation in Table 1, the polyolefin resin (a), the foaming agent, the foaming auxiliary agent, and the antioxidant were fed to a second extruder and then melt-kneaded at 130°C to prepare a foamable resin composition for a base material layer.

As the resin, the foaming auxiliary agent, and the antioxidant for the surface layers, the same as those for the base material layer described above were provided. According to the formulation in Table 1, the polyolefin resin (a), the foaming auxiliary agent, and the antioxidant were fed to first and third extruders and then melt-kneaded at 130°C to prepare resin compositions for surface layers 1,2.

The expandable resin composition at a thickness of 320 $\mu$m from the second extruder and the resin composition at a thickness of 210 $\mu$m from each of the first and third extruders were coextruded to give an unfoamed multilayer laminate sheet including a layer formed of the expandable resin composition for base material layer and layers laminated on both sides of the layer, the layers formed of the resin composition for surface layer.

Next, the multilayer laminate sheet was irradiated with an electron beam of 4.0 Mrad at an accelerating voltage of 500 kV to crosslink the multilayer laminate sheet. Thereafter, the crosslinked multilayer laminate sheet was continuously fed into a foaming furnace retained at 250°C by hot air and an infrared heater, heated, and foamed. The foamed sheet was stretched according to the target thickness by a stretch process to thereby give a multilayer foam sheet of Example 1, in which the foam layers having a different ratio were laminated.

<Examples 2 to 9>

Multilayer foam sheets were obtained in the same manner as in Example 1, except for changing the kind of resin for forming each layer, the formulation for the components, and the thickness of each of the compositions coextruded as shown in Tables 1 to 3.

<Example 10>

A multilayer foam sheet of Example 9, which was composed of a base material layer and a surface layer laminated on only one side of the base material layer, was obtained in the same manner as in Example 1, except that no materials were fed to the third extruder, which was not used, and that the kind of resin for forming each layer and the formulation for the components were changed as shown in Table 3.

<Comparative Examples 1 to 4>

Monolayer foam sheets were obtained in the same manner as in Example 1, except for the following: no materials were fed to the first extruder and the third extruder and these extruders were not used; the kind of resin for forming each layer and the formulation for the components were changed as shown in Tables 1 and 2; and the gel fraction was not measured.

<Comparative Examples 5 and 6>

Monolayer foam sheets were obtained in the same manner as in Example 1, except that no materials were fed to the first extruder and the third extruder and these extruders were not used, and that the kind of resin for forming each layer and the formulation for the components were changed as shown in Table 3.

[Table 1]

| | | Example 1 | | | Comparative Example 1 | Example 2 | | | Comparative Example 2 | Example 3 | | | Comparative Example 3 |
|---|---|---|---|---|---|---|---|---|---|---|---|---|---|
| | | Surface layer 1 | Base material layer | Surface layer 2 | Base material layer | Surface layer 1 | Base material layer | Surface layer 2 | Base material layer | Surface layer 1 | Base material layer | Surface layer 2 | Base material layer |
| Formulation (parts by mass) | Polyolefin resin (a) | 100 | 100 | 100 | 100 | 70 | 100 | 70 | 100 | 100 | 60 | 100 | 60 |
| | Polyolefin resin (b) | | | | | 30 | | 30 | | | | | |
| | Polyolefin resin (c) | | | | | | | | | | 40 | | 40 |
| | Elastomer resin (a) | | | | | | | | | | | | |
| | Elastomer resin (b) | | | | | | | | | | | | |
| | Elastomer resin (c) | | | | | | | | | | | | |
| | Additives — Foaming agent | | 7 | | 5 | | 6 | | 5 | | 5 | | 7 |
| | Additives — Foaming auxiliary agent | 1 | 1 | 1 | 1 | 1 | 1 | 1 | 1 | 1 | 1 | 1 | 1 |
| | Additives — Antioxidant | 0.5 | 0.5 | 0.5 | 0.5 | 0.5 | 0.5 | 0.5 | 0.5 | 0.5 | 0.5 | 0.5 | 0.5 |
| Thickness of each layer before foaming (mm) | | 0.21 | 0.32 | 0.21 | 0.53 | 0.25 | 0.33 | 0.25 | 0.25 | 0.3 | 0.5 | 0.3 | 0.65 |
| Total thickness before foaming (mm) | | 0.8 | | | 0.53 | 0.8 | | | 0.25 | 1.1 | | | 0.65 |
| Foam sheet — Thickness of each layer after foaming (mm) | | 0.02 | 0.75 | 0.02 | 0.8 | 0.04 | 0.24 | 0.04 | 0.32 | 0.05 | 1 | 0.05 | 1 |
| Foam sheet — Total thickness after foaming (mm) | | 0.79 | | | 0.8 | 0.32 | | | 0.32 | 1.1 | | | 1 |
| Foam sheet — Expansion rate of each layer (cm$^3$/g) | | 1 | 16 | 1 | 8 | 1 | 11 | 1 | 5 | 1 | 9 | 1 | 10 |
| Foam sheet — Apparent density of each layer (g/cm$^3$) | | 1 | 0.0625 | 1 | 0.125 | 1 | 0.087 | 1 | 0.2 | 1 | 0.11111 | 1 | 0.1 |
| Total apparent density (g/cm$^3$) | | 0.12 | | | 0.125 | 019 | | | 0.2 | 0.19 | | | 0.1 |

17

(continued)

| | | | Example 1 | | | Comparative Example 1 | Example 2 | | | Comparative Example 2 | Example 3 | | | Comparative Example 3 |
|---|---|---|---|---|---|---|---|---|---|---|---|---|---|---|
| | | | Surface layer 1 | Base material layer | Surface layer 2 | Base material layer | Surface layer 1 | Base material layer | Surface layer 2 | Base material layer | Surface layer 1 | Base material layer | Surface layer 2 | Base material layer |
| Average cell diameter ($\mu$m) | MD | | | 210 | | 182 | | 200 | | 162 | | 203 | | 160 |
| | TD | | | 154 | | 160 | | 191 | | 186 | | 145 | | 153 |
| | ZD | | | 139 | | 171 | | 82 | | 138 | | 140 | | 148 |
| Tensile strength (Mpa) | MD | | | 3.3 | | 3.0 | | 4.1 | | 3.6 | | 3.6 | | 1.5 |
| | TD | | | 2.1 | | 2.0 | | 3.7 | | 3.3 | | 2.6 | | 1.3 |
| 25% Compressive strength (kPa) | | | | 52 | | 68 | | 140 | | 75 | | 92 | | 85 |
| Stress relaxation rate (%) | | | | 27 | | 15 | | 29 | | 10 | | 25 | | 20 |
| Gel fraction (%) | | | - | 16 | - | - | - | 28 | - | - | - | 19 | - | - |
| Evaluation of unevenness in screen | | | | B | | C | | B | | C | | B | | B |
| Evaluation of reworkability | | | | A | | B | | A | | B | | A | | C |
| Holding characteristics | Holding time | | | 430 min | | 340 min | | - | | | | - | | - |
| | Remaining load (after 1 min) | | | 46N | | 57N | | - | | | | - | | - |
| | Remaining load (after 50 min) | | | 39N | | 47N | | - | | | | - | | - |

EP 4 691 757 A1

18

[Table 2]

| Formulation (parts by mass) | | | Example 4 | | | Example 5 | | | Comparative Example 4 | Example 6 | | | Example 7 | | |
|---|---|---|---|---|---|---|---|---|---|---|---|---|---|---|---|
| | | | Surface layer 1 | Base material layer | Surface layer 2 | Surface layer 1 | Base material layer | Surface layer 2 | Base material layer | Surface layer 1 | Base material layer | Surface layer 2 | Surface layer 1 | Base material layer | Surface layer 2 |
| Formulation (parts by mass) | | Polyolefin resin (a) | 100 | 70 | 100 | 100 | 70 | 100 | 70 | 100 | 70 | 100 | 100 | 30 | 100 |
| | | Polyolefin resin (b) | | | | | | | | | | | | | |
| | | Polyolefin resin (c) | | | | | | | | | | | | | |
| | | Elastomer resin (a) | | 30 | | | 30 | | 30 | | | | | | |
| | | Elastomer resin (b) | | | | | | | | | 30 | | | 70 | |
| | | Elastomer resin (c) | | | | | | | | | | | | | |
| | Additives | Foaming agent | | 8 | | 3 | 6 | 3 | 4 | | 8 | | | 10 | |
| | | Foaming auxiliary agent | 1 | 1 | 1 | 1 | 1 | 1 | 1 | 1 | 1 | 1 | 1 | 1 | 1 |
| | | Antioxidant | 0.5 | 0.5 | 0.5 | 0.5 | 0.5 | 0.5 | 0.5 | 0.5 | 0.5 | 0.5 | 0.5 | 0.5 | 0.5 |
| Thickness of each layer before foaming (mm) | | | 0.18 | 0.52 | 0.18 | 0.2 | 0.52 | 0.2 | 0.36 | 0.18 | 0.52 | 0.18 | 0.18 | 0.52 | 0.18 |
| Total thickness before foaming (mm) | | | 0.88 | | | 0.92 | | | 0.36 | 0.88 | | | 0.88 | | |

(continued)

| | | Example 4 | | | Example 5 | | | Comparative Example 4 | Example 6 | | | Example 7 | | |
|---|---|---|---|---|---|---|---|---|---|---|---|---|---|---|
| | | Surface layer 1 | Base material layer | Surface layer 2 | Surface layer 1 | Base material layer | Surface layer 2 | Base material layer | Surface layer 1 | Base material layer | Surface layer 2 | Surface layer 1 | Base material layer | Surface layer 2 |
| Foam sheet | Thickness of each layer after foaming (mm) | 0.02 | 1.05 | 0.02 | 0.03 | 0.27 | 0.03 | 0.3 | 0.02 | 1.05 | 0.02 | 0.015 | 1.54 | 0.015 |
| | Total thickness after foaming (mm) | 1.09 | | | 0.33 | | | 0.3 | 1.09 | | | 1.57 | | |
| | Expansion rate of each layer (cm³/g) | 1 | 17 | 1 | 3 | 9 | 3 | 10 | 1 | 17 | 1 | 1 | 15 | 1 |
| | Apparent density of each layer (g/cm³) | 1 | 0.0.57 | 1 | 0.33 | 0.11 | 0.33 | 0.11 | 1 | 0.057 | 1 | 1 | 0.037 | 1 |
| | Total apparent density (g/cm³) | 0.09 | | | 0.15 | | | 0.11 | 0.09 | | | 0.055 | | |
| | Average cell diameter (μm) — MD | 175 | | | 194 | | | 185 | 175 | | | 230 | | |
| | TD | 132 | | | 221 | | | 230 | 132 | | | 210 | | |
| | ZD | 118 | | | 98 | | | 91 | 118 | | | 190 | | |
| | Tensile strength (Mpa) — MD | 2.2 | | | 3.8 | | | 1.5 | 2.7 | | | 1.8 | | |
| | TD | 1.9 | | | 2.5 | | | 1.3 | 2.4 | | | 1.6 | | |
| | 25% Compressive strength (kPa) | 54 | | | 54 | | | 50 | 50 | | | 55 | | |
| | Stress relaxation rate (%) | 43 | | | 52 | | | 55 | 38 | | | 54 | | |
| | Gel fraction (%) | - | 17 | - | - | 37 | - | - | - | 28 | - | - | 20 | - |
| | Evaluation of unevenness in screen | A | | | A | | | A | A | | | A | | |
| | Evaluation of reworkability | A | | | B | | | C | A | | | A | | |

[Table 3]

| | | | Example 8 | | | Example 9 | | | Example 10 | | Comparative Example 5 | Comparative Example 6 |
|---|---|---|---|---|---|---|---|---|---|---|---|---|
| | | | Surface layer 1 | Base material layer | Surface layer 2 | Surface layer 1 | Base material layer | Surface layer 2 | Surface layer 1 | Base material layer | Base material layer | Base material layer |
| Formulation (parts by mass) | Polyolefin resin (a) | | 100 | 70 | 100 | 100 | 70 | 100 | 100 | 70 | 70 | 70 |
| | Polyolefin resin (b) | | | | | | | | | | | |
| | Polyolefin resin (c) | | | | | | | | | | | |
| | Bastomer resin (a) | | | | | | | | | | 30 | |
| | Bastomer resin (b) | | | | | | 5 | | | 5 | | 5 |
| | Elastomer resin (c) | | | 30 | | | 25 | | | 25 | | 25 |
| | Additives | Foaming agent | | 8 | | | 8 | | | 8 | 10 | 8 |
| | | Foaming auxiliary agent | 1 | 1 | 1 | 1 | 1 | 1 | 1 | 1 | 1 | 1 |
| | | Antioxidant | 0.5 | 0.5 | 0.5 | 0.5 | 0.5 | 0.5 | 0.5 | 0.5 | 0.5 | 0.5 |
| Thickness of each layer before foaming (mm) | | | 0.18 | 0.52 | 0.18 | 0.18 | 0.52 | 0.18 | 0.18 | 0.52 | 0.65 | 0.36 |
| Total thickness before foaming (mm) | | | 0.88 | | | 0.88 | | | 0.7 | | 0.65 | 0.36 |

(continued)

| | Example 8 | | | Example 9 | | | Example 10 | | Comparative Example 5 | Comparative Example 6 |
|---|---|---|---|---|---|---|---|---|---|---|
| Foam sheet | Surface layer 1 | Base material layer | Surface layer 2 | Surface layer 1 | Base material layer | Surface layer 2 | Surface layer 1 | Base material layer | Base material layer | Base material layer |
| Thickness of each layer after foaming (mm) | 0.02 | 1.05 | 0.02 | 0.02 | 1.05 | 0.02 | 0.02 | 0.68 | 1.0 | 0.4 |
| Total thickness after foaming (mm) | | 1.09 | | | 1.09 | | | 0.7 | 1.0 | 0.4 |
| Expansion rate of each layer (cm³/g) | 1 | 19 | 1 | 1 | 17 | 1 | 1 | 17 | 15 | 10 |
| Apparent density of each layer (g/cm³) | 1 | 0.053 | 1 | 1 | 0.057 | 1 | 1 | 0.053 | 0.067 | 0.1 |
| Total apparent density (g/cm³) | | 0.09 | | | 0.09 | | | 0.084 | 0.067 | 0.1 |
| Average cell diameter (µm) MD | | 160 | | | 168 | | | 118 | 157 | 126 |
| Average cell diameter (µm) TD | | 129 | | | 120 | | | 105 | 142 | 159 |
| Average cell diameter (µm) ZD | | 110 | | | 105 | | | 95 | 135 | 35 |
| Tensile strength (Mpa) MD | | 2.0 | | | 2.6 | | | 2.1 | 1.4 | 1.2 |
| Tensile strength (Mpa) TD | | 2.2 | | | 2.4 | | | 2.0 | 1 | 1.0 |
| 25% Compressive strength (kPa) | | 48 | | | 52 | | | 44 | 50 | 50 |
| Stress relaxation rate (%) | | 50 | | | 45 | | | 60 | 48 | 38 |
| Gel fraction (%) | - | 26 | - | - | 33 | - | - | 22 | 20 | 23 |
| Evaluation of unevenness in screen | | A | | | A | | | A | A | A |
| Evaluation of rework-ability | | A | | | A | | | B (due to one side lamination) | C | C |

As clear from the results above, the multilayer foam sheets prepared in Examples, which met the requirements of the present invention, caused no unevenness of light in the screen and also had excellent reworkability.

In contrast, the foam sheets prepared in Comparative Examples 1 and 2 each had a stress relaxation rate lower than the predetermined level, and therefore caused unevenness of light in an image in the screen. The foam sheets prepared in Comparative Examples 3 and 6 each had a tensile strength lower than the predetermined level, and therefore failed to exhibit excellent reworkability.

The multilayer foam sheet prepared in Example 1 had a smaller load remaining after one minute than that of the foam sheet prepared in Comparative Example 1, which had a single layer, and thus successively achieved stress relaxation within a short time, and in addition, the multilayer foam sheet prepared in Example 1 had a smaller load remaining after 50 minutes than that of the foam sheet prepared in Comparative Example 1. From these, it is suggested that the strain applied to the pressure-sensitive adhesive was dispersed in the foam sheet according to the present invention as compared to a monolayer foam sheet, and that as a result the multilayer foam sheet according to the present invention had a longer holding time.

Reference Signs List

10 test piece
11 jig
11A bottom of jig
11B projecting part of jig

**Claims**

1. A multilayer foam sheet comprising: a base material layer that is a foam layer; and a surface layer that is a foam layer or a non-foam layer and that is laminated on at least one side of the base material layer directly or via another layer,

   the multilayer foam sheet having a stress relaxation rate of 25% or more, and
   the multilayer foam sheet having a tensile strength of 1.6 MPa or more.

2. The multilayer foam sheet according to claim 1, wherein the multilayer foam sheet has a density of 0.05 to 0.2 g/cm$^3$.

3. The multilayer foam sheet according to claim 1 or 2, wherein the multilayer foam sheet has a thickness of 0.3 to 1.7 mm.

4. The multilayer foam sheet according to claim 1 or 2, wherein the multilayer foam sheet has a 25% compressive strength of 150 kPa or less.

5. The multilayer foam sheet according to claim 1 or 2, wherein

   when the multilayer foam sheet comprises the surface layer on either one side of the base material layer, a ratio of a thickness of the base material layer to a thickness of the surface layer is 5 or more, and
   when the multilayer foam sheet comprises the surface layer on each of both sides of the base material layer, a ratio of a thickness of the base material layer to an average thickness of the surface layers is 5 or more.

6. The multilayer foam sheet according to claim 1 or 2, wherein the base material layer has a density of 0.04 to 0.14 g/cm$^3$.

7. The multilayer foam sheet according to claim 1 or 2, wherein

   when the surface layer is the foam layer, the base material layer has a gel fraction of 13 to 50% by mass, and
   when the surface layer is the non-foam layer, the base material layer has a gel fraction of 13 to 75% by mass.

8. The multilayer foam sheet according to claim 1 or 2, wherein the base material layer comprises at least one selected from the group consisting of an olefinic resin and a thermoplastic elastomer.

9. A pressure-sensitive adhesive tape comprising a pressure-sensitive adhesive material on at least one side of the multilayer foam sheet according to claim 1 or 2.

Fig. 1

## INTERNATIONAL SEARCH REPORT

| International application No. |
| --- |
| **PCT/JP2024/013335** |

### A. CLASSIFICATION OF SUBJECT MATTER

***B32B 5/18***(2006.01)i; ***B32B 7/022***(2019.01)i; ***C09J 7/26***(2018.01)i; ***C09J 7/29***(2018.01)i; ***C09J 7/38***(2018.01)i
FI:   B32B5/18 101; B32B7/022; C09J7/29; C09J7/26; C09J7/38

According to International Patent Classification (IPC) or to both national classification and IPC

### B. FIELDS SEARCHED

Minimum documentation searched (classification system followed by classification symbols)

B32B1/00-43/00; C08J9/00-9/42; C09J7-00-7/50

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-138494 A (SEKISUI CHEM. CO., LTD.) 03 September 2020 (2020-09-03) whole document | 1-9 |
| A | JP 2020-200410 A (SEKISUI CHEM. CO., LTD.) 17 December 2020 (2020-12-17) whole document | 1-9 |
| A | WO 2019/189452 A1 (SEKISUI CHEM. CO., LTD.) 03 October 2019 (2019-10-03) whole document | 1-9 |
| A | JP 2022-131586 A (SEKISUI CHEM. CO., LTD.) 07 September 2022 (2022-09-07) whole document | 1-9 |
| A | JP 2019-157010 A (SEKISUI CHEM. CO., LTD.) 19 September 2019 (2019-09-19) whole document | 1-9 |
| A | JP 2022-094735 A (DIC CORP.) 27 June 2022 (2022-06-27) whole document | 1-9 |

☑ Further documents are listed in the continuation of Box C.      ☑ See patent family annex.

| | |
| --- | --- |
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **10 June 2024** | **18 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/013335** |

### C. DOCUMENTS CONSIDERED TO BE RELEVANT

| Category* | Citation of document, with indication, where appropriate, of the relevant passages | Relevant to claim No. |
|---|---|---|
| A | WO 2015/098494 A1 (DIC CORP.) 02 July 2015 (2015-07-02)<br>whole document | 1-9 |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2020-138494 | A | 03 September 2020 | (Family: none) | | | |
| JP | 2020-200410 | A | 17 December 2020 | (Family: none) | | | |
| WO | 2019/189452 | A1 | 03 October 2019 | JP | 2019-171819 | A | |
| | | | | JP | 2019-177668 | A | |
| | | | | KR | 10-2020-0138235 | A | |
| | | | | CN | 112074403 | A | |
| | | | | TW | 201942284 | A | |
| JP | 2022-131586 | A | 07 September 2022 | US | 2023/0382082 | A1 | |
| | | | | whole document | | | |
| | | | | WO | 2022/080219 | A1 | |
| | | | | EP | 4230399 | A1 | |
| | | | | CN | 116348292 | A | |
| | | | | KR | 10-2023-0087477 | A | |
| JP | 2019-157010 | A | 19 September 2019 | (Family: none) | | | |
| JP | 2022-094735 | A | 27 June 2022 | CN | 114634772 | A | |
| WO | 2015/098494 | A1 | 02 July 2015 | US | 2016/0339672 | A1 | |
| | | | | whole document | | | |
| | | | | KR | 10-2016-0102185 | A | |
| | | | | CN | 105829473 | A | |
| | | | | TW | 201533208 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022131586 A
- JP 2022064669 A
- WO 2022030649 A
- WO 2022080219 A